(19) Europäisches Patentamt
European Patent Office
Office européen des brevets

(11) **EP 2 879 927 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(21) Anmeldenummer: **13732875.3**

(22) Anmeldetag: **21.06.2013**

(51) Int Cl.:
*B60W 10/06* (2006.01)    *B60W 10/08* (2006.01)
*B60W 30/02* (2012.01)    *B60W 40/06* (2012.01)
*B60W 50/00* (2006.01)

(86) Internationale Anmeldenummer:
**PCT/EP2013/063037**

(87) Internationale Veröffentlichungsnummer:
**WO 2014/019769 (06.02.2014 Gazette 2014/06)**

(54) **VERFAHREN UND VORRICHTUNG ZUR BESTIMMUNG EINER QUERNEIGUNG EINER VON EINEM ZWEIRADFAHRZEUG BEFAHRENEN FAHRBAHNOBERFLÄCHE**

METHOD AND DEVICE FOR DETERMINING THE CROSS SLOPE OF A CARRIAGEWAY SURFACE ON WHICH A TWO-WHEELED VEHICLE IS TRAVELLING

PROCÉDÉ ET DISPOSITIF DESTINÉS À DÉTERMINER L'INCLINAISON TRANSVERSALE D'UNE SURFACE DE CHAUSSÉE SUR LAQUELLE ROULE UN VÉHICULE À DEUX ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2012 DE 102012213688**

(43) Veröffentlichungstag der Anmeldung:
**10.06.2015 Patentblatt 2015/24**

(73) Patentinhaber: **Robert Bosch GmbH**
**70442 Stuttgart (DE)**

(72) Erfinder: **MOERBE, Matthias**
**74360 Ilsfeld-Helfenberg (DE)**

(56) Entgegenhaltungen:
EP-A1- 2 127 989        EP-A2- 0 370 469
DE-A1-102008 043 794    US-A1- 2008 082 246
US-B2- 6 718 248

• **VITTORE COSSALTER ET AL: "Steady Turning of Two-Wheeled Vehicles", VEHICLE SYSTEM DYNAMICS, SWETS & ZEITLINGER BV, NL , Bd. 31, Nr. 3 31. Dezember 1999 (1999-12-31), Seiten 157-181, XP002692787, ISSN: 0042-3114, DOI: 10.1076/VESD.31.3.157.2013 Gefunden im Internet: URL:http://www.dinamoto.it/dinamoto/7_MDRG _papers/_MDRG%20Papers%20in%20PDF%20f ormat /1999_11%20Steady%20Turning%20of%20Two- Whe eled%20Vehicles_VSD.pdf [gefunden am 2013-02-25]**

EP 2 879 927 B1

**Beschreibung**

Die vorliegende Erfindung betrifft ein Verfahren und eine Vorrichtung zur Bestimmung einer Querneigung einer von einem Zweiradfahrzeug befahrenen Fahrbahnoberfläche und ein entsprechendes Computerprogrammprodukt.

Stand der Technik

Der Begriff Querneigung (in der Schweiz auch Quergefälle genannt) bezeichnet im Straßen- und Wegebau die Neigung der Fahrbahnoberfläche (oder einer darunterliegenden Schicht) in einer Richtung rechtwinklig zur Straßenachse. Die Querneigung q wird üblicherweise in Prozent angegeben. Beispielsweise entspricht 1 % Querneigung einer Höhendifferenz von 1 cm auf 1 m. Hauptzweck einer Querneigung ist die rasche und schadlose Abführung von Oberflächenwasser, um den Straßenkörper vor Feuchtigkeit zu schützen und Wasseransammlungen bzw. deren Folgen (Aquaplaning, Sprühfahnen- oder Glatteisbildung) zu verhindern. Die Querneigung dient jedoch auch fahrdynamischen Zwecken, wie beispielsweise der Aufnahme bzw. Reduzierung der Fliehkraft in schnell durchfahrenen Kurven. Die Querneigung dient weiter zur optischen Führung des Fahrers, da die Wahrnehmung der Kurve hierdurch verbessert wird.

Moderne Antiblockier- (ABS) und Integralbremssysteme bei Zweiradfahrzeugen sind bei sogenannten Geradeausbremsungen und Bremsungen bei mittleren Schräglagen ausgereift und sicher. Bei größeren Schräglagen müssen die Parameter des Bremssystems (z.B. Bremskraftverteilung, Bremsdruckgradient und Regelstrategie) an die Kurvenfahrt angepasst werden, um auch hier ein sicheres Bremsen zu gewährleisten. Die Kenntnis der Schräglage des Zweiradfahrzeugs ist hierfür essentiell. Aber auch Kurvenlichtsysteme, Fahrwerksysteme und Fahrdynamikregelsysteme erfordern zumindest die Schräglage als Eingabegröße.

Eine während einer Kurvenfahrt durchgeführte Bremsung führt bei Zweiradfahrzeugen aufgrund der geometrischen Verhältnisse zu einem Lenkmoment in Richtung der Kurveninnenseite. Dieses Lenkmoment verursacht ein sogenanntes Aufstellmoment. Um dieses zumindest abzuschwächen, können daher Lenkassistenten vorgesehen sein, die in Abhängigkeit von der Stärke der Bremsung einen Lenkimpuls auf die Lenkung ausüben. Der Lenkimpuls ist in Richtung der Kurvenaußenseite gerichtet. Er wirkt dem Aufstellmoment entgegen. Auch hierzu ist eine Kenntnis zumindest der Schräglage erforderlich.

Die Schräglage kann, wie beispielsweise in der DE 10 2007 061114 A1 und der DE 10 2011 076 640 A1 angegeben, mit einem Schräglagensensor ermittelt werden. Bekannte Schräglagensensoren messen die Schräglage des Zweiradfahrzeugs jedoch nur in Bezug auf die Horizontale oder Vertikale. Die Querneigung der Fahrbahn wird hingegen nicht berücksichtigt.

Für die bei einer Beschleunigung oder beim Bremsen übertragbare Kraft ist die Neigung des Zweiradfahrzeugs zur Fahrbahnoberfläche jedoch ebenfalls entscheidend. Beispielsweise kann in einer stärker in Richtung der Kurveninnenseite geneigten Kurve stärker beschleunigt werden als in einer Kurve, deren Querneigung geringer oder gar nach außen gerichtet ist.

Aus der DE 10 2008 043 794 A1 sind ein Verfahren und eine Vorrichtung zum Bestimmen des Schräglagewinkels eines Zweiradfahrzeugs bekannt. Dabei ist vorgesehen, den Schräglagenwinkel des Fahrzeugs zu bestimmen, indem die Querbeschleunigung mittels eines Querbeschleunigungssensors gemessen und die Beschleunigung in Richtung der Hochachse des Fahrzeugs ermittelt und der Schräglagenwinkel gegenüber der Fahrbahn normalen auf Basis der beiden Beschleunigungswerte berechnet wird.

Aus der EP 2 127 989 A1 ist ein Verfahren zur Bestimmung des absoluten Rollwinkels eines Zweirads bekannt. Darin ist beschrieben, die Querneigung einer Fahrbahn zu ermitteln. Der geometrische Zusammenhang zwischen absoluter Schräglage, Neigung gegenüber der Fahrbahn und Querneigung der Fahrbahn ist ebenfalls dargestellt.

In den genannten Anwendungsfällen bei Zweiradfahrzeugen besteht daher der Bedarf nach Verbesserungen, die die Querneigung berücksichtigen.

Offenbarung der Erfindung

Vor diesem Hintergrund schlägt die vorliegende Erfindung ein Verfahren und eine Vorrichtung zur Bestimmung einer Querneigung einer von einem Zweiradfahrzeug befahrenen Fahrbahnoberfläche und ein entsprechendes Computerprogrammprodukt mit den Merkmalen der unabhängigen Patentansprüche vor. Bevorzugte Ausgestaltungen sind Gegenstand der Unteransprüche sowie der nachfolgenden Beschreibung.

Vorteile der Erfindung

Der Erfindung liegt der Gedanke zugrunde, eine Beziehung zwischen einem Abrollumfang wenigstens eines Rades des Zweiradfahrzeugs und/oder einer davon abhängigen Größe, z.B. des Abrollumfangs oder der Raddrehzahl, und einer Neigung zu der jeweils befahrenen Fahrbahnoberfläche zur Bestimmung dieser Neigung zu verwenden. In Kombination mit einer beispielsweise durch einen Schräglagensensor bestimmten Schräglage kann hieraus, beispielsweise rechnerisch, die Querneigung der Fahrbahnoberfläche ermittelt werden.

Im Rahmen dieser Anmeldung bezeichnet eine "Schräglage" die Neigung des Zweiradfahrzeugs in Bezug auf die Horizontale. Hierbei handelt es sich also um eine Größe unabhängig von der Querneigung. Eine "Neigung zur Fahrbahnoberfläche" bezeichnet die Lage des Zweiradfahrzeugs in Bezug auf die Fahrbahnoberfläche. Das Zweiradfahrzeug selbst und/oder die Fahrbahn können dabei eine Schräglage bzw. Querneigung aufweisen. Weist beispielsweise das Zweiradfahrzeug selbst keine Schräglage auf, die Fahrbahn jedoch eine Querneigung oder umgekehrt, besteht eine Neigung zur Fahrbahnoberfläche. Weisen hingegen sowohl das Zweiradfahrzeug als auch die Fahrbahn eine gleichsinnige Schräglage bzw. Querneigung (beispielsweise von 10° bzw. 22%) auf, ist das Zweiradfahrzeug gegenüber der Fahrbahnoberfläche nicht geneigt.

Wie insbesondere aus den beigefügten Zeichnungen ersichtlich, reicht ein einzelnes Verfahren alleine zur Bestimmung der Querneigung nicht aus.

So messen, wie erwähnt, bekannte Schräglagensensoren nur die Schräglage des Zweiradfahrzeugs, also nur eine Neigung in Bezug auf die Horizontale oder Vertikale, in der Regel bezüglich des Schwerefelds der Erde. Hierbei kommen beispielsweise mehrere Beschleunigungssensoren zum Einsatz. Auch mittels bekannter Gierratensensoren, welche z.B. in Fahrdynamikregelsystemen für Pkw seit einiger Zeit Verwendung finden, kann eine Schräglage erfasst werden. Die Querneigung wird jedoch hierbei ebenfalls nicht berücksichtigt.

Eine Neigung des Zweiradfahrzeugs gegenüber der Fahrbahnoberfläche kann andererseits beispielsweise durch Sensoren bestimmt werden, welche an bestimmten Positionen des Fahrzeuges angebracht sind, und welche über z.B. über Triangulationsverfahren die Schräglage bestimmen. Hierbei können sich bei unterschiedlicher Neigung ändernde Abstände von Fahrzeugbauteilen zur Fahrbahn mittels Sensoren vermessen werden. Die Sensoren können z.B. Ultraschall-, Mikrowellen-, Radar-, Lidar-, Laser- oder optische Sensoren sein. Abgesehen davon, dass diese Sensoren in der Regel teuer und störanfällig sind, kann hierüber wiederum keine Schräglage im obigen Sinn erfasst werden.

Die Erfindung schlägt demgegenüber ein einfaches und zuverlässiges Verfahren vor, das auf Grundlage einer bekannten Beziehung zwischen dem Abrollumfang wenigstens eines Rads des Zweiradfahrzeugs und dessen Neigung zur Fahrbahnoberfläche beruht. Diese Beziehung kann beispielsweise auf Grundlage einer Vermessung üblicherweise verwendeter Reifen und/oder empirisch - z.B. beim Befahren einer Fahrbahnoberfläche ohne Querneigung aber bei unterschiedlichen Schräglagen - ermittelt werden.

Besonders vorteilhaft ist es hierbei, nicht nur den Abrollumfang nur eines Rades sondern mehrerer Räder zu verwenden. Zweiradfahrzeuge weisen bekanntermaßen an ihren Vorder- und Hinterrädern Reifen mit unterschiedlichen Konturen auf. Wie auch im Zusammenhang mit den beigefügten Figuren erläutert, kommt es bei einer Neigung des Zweiradfahrzeugs gegenüber der Fahrbahnoberfläche dazu, dass beide Räder durch einen kleineren Abrollumfang auf einer höheren Geschwindigkeit laufen als ohne eine entsprechende Neigung. Diese Änderung ist beim Vorderrad geringer ausgeprägt als beim Hinterrad. Damit kommt es abhängig von der Neigung zu unterschiedlichen Raddrehzahldifferenzen zwischen Vorder- und Hinterraddrehzahl. Für herkömmliche Schlupfregelungsverfahren bedeutet dies beispielsweise, dass die Raddrehzahldifferenz zwischen Vorder- und Hinterraddrehzahl nicht als geeignete Regelgröße verwendet werden kann.

Die genannten Beziehungen lassen sich dabei wie folgt angeben:

$$\Delta v = f(\text{Neigung})$$

$$\Delta v = v_V - v_H = 0 \Rightarrow \text{keine Neigung,}$$

wobei $\Delta v$ die Drehzahldifferenz zwischen Vorder- und Hinterrad angibt und $v_V$ und $v_H$ die entsprechenden Einzeldrehzahlen bezeichnen.

Mit anderen Worten kann dies bedeuten, dass, wenn kein Drehzahlunterschied zwischen Vorder- und Hinterrad feststellbar ist, darauf geschlossen werden kann, dass keine Neigung zur Fahrbahnoberfläche vorliegt. Wird in diesem Fall über einen Schräglagensensor dennoch eine Schräglage detektiert, kann davon ausgegangen werden, dass die Straßenoberfläche selbst eine Querneigung aufweist. Bei Zwischenzuständen, beispielsweise der gleichzeitigen Feststellung einer Neigung des Zweiradfahrzeugs gegenüber der Fahrbahnoberfläche und einer Bestimmung einer Schräglage über einen Schräglagensensor, können entsprechende Werte einfach miteinander verrechnet werden. Insbesondere wird hierbei eine Differenz gebildet, die unmittelbar eine Querneigung der Fahrbahnoberfläche angibt. Wenn beispielsweise die Raddrehzahldifferenz größer ist, als es sich aus der Kontur des Reifens und der Schräglage ergeben würde, neigt sich die Straße zur Kurvenaußenseite. Im umgekehrten Fall ist die Straße nach außen erhöht.

Vorteilhafterweise kann aus dem Abrollumfang oder der Raddrehzahl mindestens eines Rades ein Referenzwert bestimmt werden. Besonders bevorzugt kann dies aus den Abrollumfängen oder den Raddrehzahlen des Vorder- und des Hinterrades erfolgen. Durch Berücksichtigung beider Räder ergibt sich unter anderem auch eine höhere Zuverlässigkeit. Aus einer Änderung des Referenzwertes ist ein direkter Schluss auf die Neigung zur Fahrbahnoberfläche möglich. Ein entsprechender Referenzwert kann beispielsweise bei einer Fahrt ohne jegliche Schräglage oder Neigung zur Fahrbahnoberfläche eingelernt werden. Hierzu werden besonders bevorzugt statistische Verfahren, in denen über einen vorgegebenen Zeitraum Referenzwerte gesammelt und geeignet verarbeitet werden, herangezogen. Die genannten Zusammenhänge können in Form von Funktionen oder Wertetabellen vorgegeben werden, welche, beispielsweise auch für unterschiedliche Rad- und/oder Reifentypen bzw. -formen, in einem Steuergerät hinterlegt werden können. Dabei handelt es sich vorteilhafterweise um das Steuergerät, welches die ermittelten Werte weiter verwendet.

Bevorzugt werden die verwendeten Werte zumindest teilweise unter Berücksichtigung von Drehmomentsänderungen und/oder Geschwindigkeitsänderungen und/oder anderen, insbesondere von Sensoren ermittelten, Fahrzeug- und/oder Umgebungsinformationen, bestimmt. Hierdurch können Störeffekte, die einen Einfluss auf diese Werte haben, aber nicht direkt auf einer Neigung zur Fahrbahnoberfläche und/oder einer Schräglage beruhen, zumindest teilweise kompensiert bzw. korrigiert werden.

Die bestimmte Querneigung kann vorteilhafterweise bei der Regelung oder Steuerung in einem elektronischen Bremssystem, in einem Scheinwerferregelungssystem und/oder in einem Fahrdynamikregelsystem herangezogen und/oder bei der Anpassung eines Reifendrucküberwachungssystem berücksichtigt werden. Die Berücksichtigung in einem Antiblockiersystem und/oder bei der elektronischen Bremskraftverteilung ist besonders vorteilhaft.

Ein besonderer Vorteil der Erfindung liegt in der kostengünstigen Realisierung des erfindungsgemäßen Verfahrens bzw. der erfindungsgemäßen Vorrichtung. Da mittlerweile auch im Bereich der Zweiradfahrzeuge Antiblockiersysteme weit verbreitet sind, welche mittels Raddrehzahlsensoren die Drehbewegung der einzelnen Räder überwachen, liegen die zur Bestimmung der Neigung zur Fahrbahnoberfläche notwendigen Informationen bereits vor. Somit entstehen keine weiteren Kosten für zusätzliche Sensoren.

Es ist lediglich noch die Bestimmung der Schräglage über einen entsprechenden Schräglagensensor erforderlich. Derartige Sensoren sind jedoch ebenfalls häufig bereits verbaut, beispielsweise für eine Schlupfregelung.

Die Bestimmung der Querneigung kann dann ohne großen Aufwand durch entsprechende Berechnungen, beispielsweise in einem Motorsteuergerät oder einer entsprechenden Recheneinheit erfolgen.

Eine derartige erfindungsgemäße Recheneinheit ist, insbesondere programmtechnisch, dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurze Beschreibung der Zeichnungen

Figur 1    zeigt in den Teilfiguren 1A bis 1C ein Vorderrad eines Zweiradfahrzeugs bei unterschiedlichen Schräglagen, Neigungen zur Fahrbahnoberfläche und Querneigungen in schematischer Darstellung.

Figur 2    zeigt in den Teilfiguren 1A bis 1C ein Hinterrad eines Zweiradfahrzeugs bei unterschiedlichen Schräglagen, Neigungen zur Fahrbahnoberfläche und Querneigungen in schematischer Darstellung.

Figur 3    zeigt ein Verfahren gemäß einer besonders bevorzugten Ausführungsform der Erfindung in Form eines Blockdiagramms.

Figur 4    zeigt ein Zweiradfahrzeug, bei dem ein erfindungsgemäßes Verfahren implementiert sein kann.

Ausführungsform(en) der Erfindung

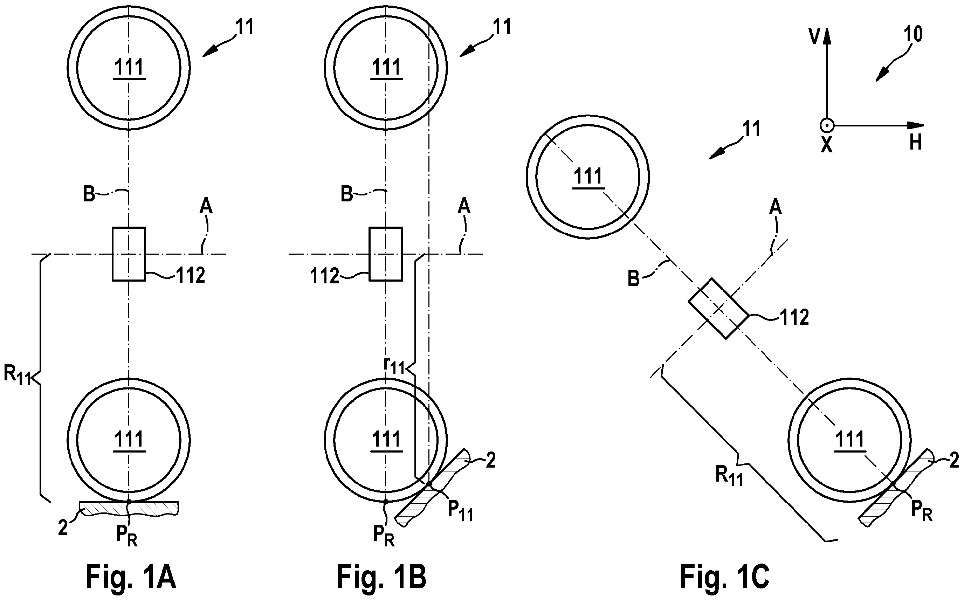

In Figur 1 ist in den Teilfiguren 1A, 1B und 1C ein Vorderrad 11 eines Zweiradfahrzeugs 1 im Querschnitt schematisch dargestellt und jeweils insgesamt mit 11 bezeichnet. Schematisch sind Reifen 111 und eine Nabe 112 des Vorderrads 11 dargestellt. Eine Fahrbahnoberfläche ist mit 2 angegeben.

Ein Koordinatensystem 10 ist zur Veranschaulichung der Lage des Vorderrads 11 im Raum dargestellt. Eine Achse H des Koordinatensystems bezeichnet die Horizontale (bezogen auf das Schwerefeld der Erde), eine Achse V die Vertikale. Die Achse X verläuft senkrecht zur Papierebene und bezeichnet beispielsweise eine Rollrichtung des Vorderrads 11 und damit eine Fahrtrichtung eines Zweiradfahrzeugs bzw. die Straßenachse. Eine Rotationsachse A des Vorderrads 11 liegt in der Papierebene. Eine Achse B verläuft senkrecht zur Rotationsachse A und ist je nach Schräglage des Vorderrads 11, und damit des Zweiradfahrzeugs, gegenüber der Vertikalen V geneigt.

In der Teilfigur 1A ist eine Situation dargestellt, in der das Vorderrad 11, und damit ein entsprechendes Zweiradfahrzeug, gegenüber der Straßenoberfläche 2 nicht geneigt ist und die Straßenoberfläche 2 auch keine Querneigung aufweist. Mit anderen Worten verläuft die Fahrbahnoberfläche 2 parallel zur Horizontalen H, das Vorderrad 11 steht senkrecht. Auch die Rotationsachse A verläuft parallel zur Achse H, die Achse B verläuft parallel zur Vertikalen V. Ein Radius $R_{11}$ bezeichnet den Abrollumfang des Vorderrads 11. Das Vorderrad kontaktiert an einem Punkt $P_R$, der dem Radius $R_{11}$ entspricht, die Fahrbahnoberfläche 2.

In der Teilfigur 1B ist eine Situation dargestellt, in der die Fahrbahnoberfläche 2 nicht mehr parallel zur Horizontalen H verläuft. Vielmehr ist die Straßenoberfläche 2 entsprechend einem übertrieben dargestellten Querneigungswinkel von hier 45° (100%) geneigt. Das Zweiradfahrzeug, und damit das Vorderrad 11, weist jedoch in der dargestellten Situation keine Schräglage auf. Es ist wie in Teilfigur 1A angeordnet. Der Reifen 111 kontaktiert die Fahrbahnoberfläche nunmehr an einem Punkt $P_{11}$, wodurch sich ein Abrollumfang $r_{11}$ ergibt. Dieser ist, wie aus Teilfigur 1B in der Zusammenschau mit der Teilfigur 1A ergibt, geringer als der Abrollumfang $R_{11}$.

Wird bereits bei einem einzigen Rad ein derartiger geringerer Abrollumfang, beispielsweise über eine höhere Abrollgeschwindigkeit, detektiert, gleichzeitig jedoch keine Schräglage des Zweiradfahrzeugs 1 erfasst, kann davon ausgegangen werden, dass eine Querneigung der Fahrbahnoberfläche 2 vorliegt, jedoch keine Schräglage des Zweiradfahrzeugs 1.

Ein abweichender Fall ist in der Teilfigur 1C dargestellt. Hier weist das Vorderrad 11 selbst, und damit das Zweiradfahrzeug, eine Schräglage auf, hier beispielsweise eine Schräglage von 45° zur Vertikalen V. Die Fahrbahnoberfläche 2 weist jedoch ebenfalls eine Querneigung von 45° auf. Der Reifen 111 kontaktiert daher die Fahrbahnoberfläche 2 wie in der Situation, die in Teilfigur 1A dargestellt ist, an dem Punkt $P_R$. Auch der Abrollumfang $R_{11}$ des Rades 11 entspricht daher jenem der Teilfigur 1A. Da eine Auswertung eines Abrollumfangs keinen Unterschied gegenüber der Teilfigur 1A geben würde, kann in diesem Fall lediglich aufgrund einer durch einen Schräglagensensor detektierten Schräglage auf die Querneigung der Fahrbahnoberfläche 2 geschlossen werden.

Zwischen den Situationen, die in den Teilfiguren 1A bis 1C dargestellt sind, können sich, wie erwähnt, Zwischensituationen ergeben, in denen die Querneigung der Fahrbahnoberfläche 2 jedoch aus den jeweils bestimmten Neigungen und Schräglagen berechnet werden kann.

In den Teilfiguren 2A bis 2C sind in Entsprechung zu den Teilfiguren 1A bis 1C der Figur 1 vergleichbare Neigungswinkel und Schräglagen eines Hinterrades 12 eines Zweiradfahrzeugs dargestellt. Die Reifen der Hinterräder 12 sind mit 121, eine Nabe ist mit 122 bezeichnet. In entsprechender Weise trägt ein maximaler Abrollumfang das Bezugszeichen $R_{12}$, ein geringerer Abrollumfang das Bezugszeichen $r_{12}$. Wie ebenfalls ersichtlich, kommt es auch hier bei einer Neigung des Zweiradfahrzeugs 1 gegenüber der Fahrbahnoberfläche (Teilfigur 2B) zu einer Verringerung des Abrollumfangs.

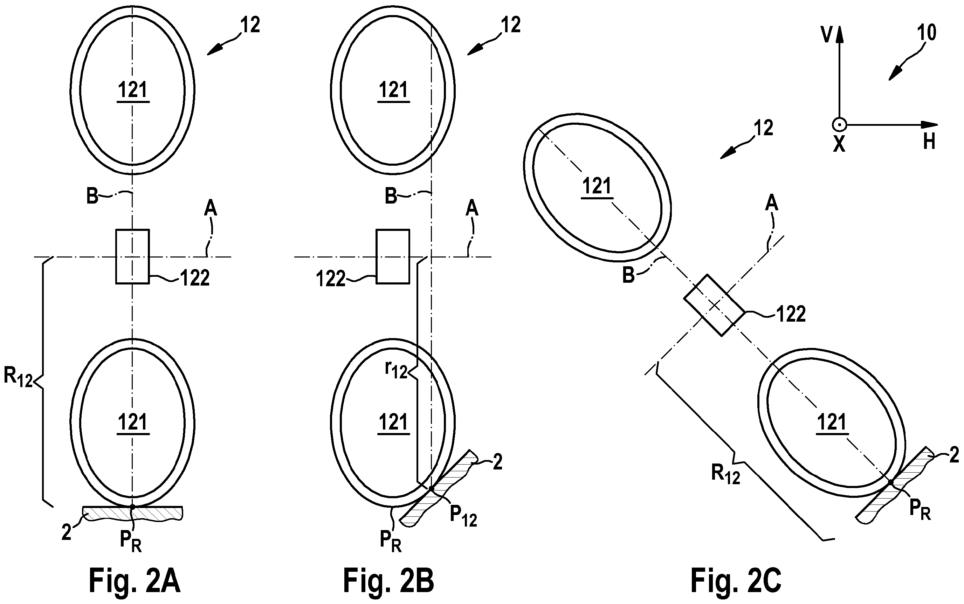

Wie aus der Zusammenschau der Figuren 1 und 2 ersichtlich, ändern sich die Abrollumfänge des Vorderrads 11 und des Hinterrads 12 jedoch bei gleicher Neigung (vgl. Teilfiguren 1B und 2B) in unterschiedlichem Umfang, weil das Vorderrad 11 und das Hinterrad 12 unterschiedliche Reifenquerschnitte aufweisen. So ist der verringerte Abrollumfang des Vorderrads $r_{11}$ immer noch größer als der verringerte Abrollumfang des Hinterrads $r_{12}$.

Bei gleicher Neigung zur Fahrbahnoberfläche 2 kontaktiert der Vorder- und Hinterreifen 11, 12 die Fahrbahnoberfläche 2 also an unterschiedlichen Positionen $P_{11}$ und $P_{12}$. Hierdurch kommt es zu unterschiedlichen Abrollumfängen $r_{11}$ und $r_{12}$. Hingegen sind die Abrollumfänge $P_R$ gleich. Hieraus wird ersichtlich, dass bei fehlender Neigung zur Fahrbahnoberfläche 2 des Zweiradfahrzeugs 1 keine Drehzahldifferenz zwischen dem Vorderrad 11 und dem Hinterrad 12 beobachtet werden kann. Eine Drehzahldifferenz tritt hingegen auf, wenn eine entsprechende Neigung vorliegt. Diese Differenz kann erfindungsgemäß für eine Bestimmung einer Neigung verwendet werden.

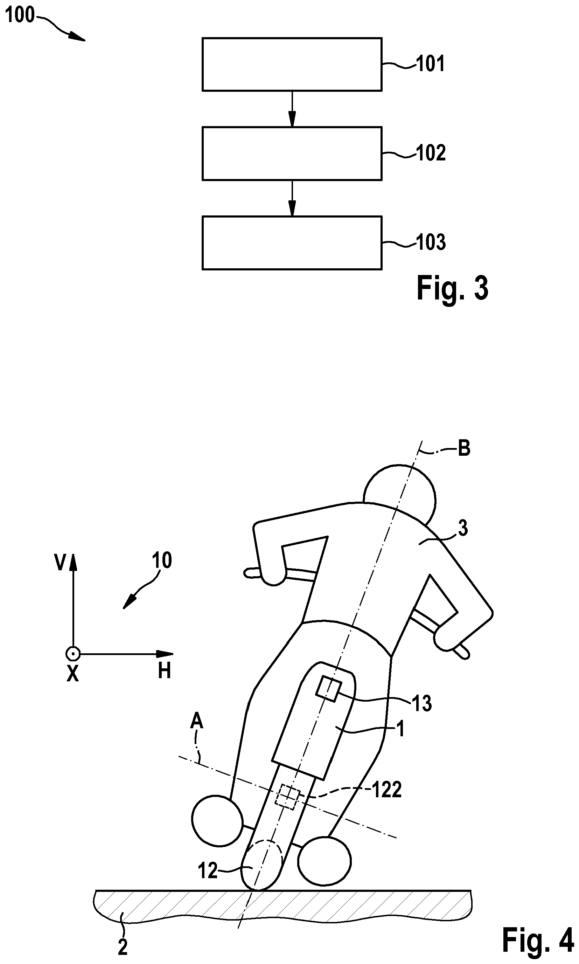

In Figur 3 ist ein Verfahren gemäß einer besonders bevorzugten Ausführungsform der Erfindung schematisch dargestellt und insgesamt mit 100 bezeichnet. Das Verfahren weist drei wesentliche Verfahrensschritte 101, 102 und 103 auf.

In einem ersten Verfahrensschritt 101 wird eine Neigung des Zweiradfahrzeugs 1 gegenüber einer Straßenoberfläche 2 bestimmt, und zwar, wie erläutert, aus Abrollumfängen und/oder hiervon abhängigen Werten.

In einem Schritt 102 wird eine Schräglage des Zweiradfahrzeugs 1 bestimmt. Wie erläutert erfolgt dies beispielsweise unter Verwendung von geeigneten Schräglagensensoren.

In einem Schritt 103 wird aus der Neigung und der Schräglage die Querneigung der Fahrbahnoberfläche 2 ermittelt.

Figur 4 zeigt ein Zweiradfahrzeug 1, das von einem Fahrer 3 auf einer Fahrbahnoberfläche 2 gefahren wird. Das Koordinatensystem 10 und die Achsen A und B entsprechen jenen der Figuren 1 und 2. Das Zweiradfahrzeug 1 ist in einer Ansicht von hinten dargestellt, so dass nur das Hinterrad 12 erkennbar ist.

Das Zweiradfahrzeug 1 weist eine Schräglagenbestimmungsvorrichtung 13, beispielsweise mit wenigstens einem Beschleunigungssensor und/oder wenigstens einem Gierratensensor, auf.

Die Fahrbahnoberfläche 2 weist in der Darstellung der Figur 5 keine Querneigung auf, das Zweiradfahrzeug 1 mit seinem Hinterrad 12 ist hingegen in Schräglage gegenüber der Vertikalen V, wie durch die Schräglagenbestimmungsvorrichtung 13 bestimmbar.

**Patentansprüche**

1. Verfahren (100) zur Bestimmung einer Querneigung einer von einem Zweiradfahrzeug (1) befahrenen Fahrbahnoberfläche (2), wobei das Zweiradfahrzeug (1) zwei Räder (11, 12) mit jeweils einem Abrollumfang aufweist, wobei sich der Abrollumfang wenigstens eines Rades (11, 12) der zwei Räder (11, 12) in Abhängigkeit von einer Neigung des Zweiradfahrzeugs (1) gegenüber der Fahrbahnoberfläche (2) ändert, wobei aus einer von dem Abrollumfang des wenigstens einen Rades (11, 12) abhängigen Größe eine Neigung des Zweiradfahrzeugs (1) gegenüber der Fahrbahnoberfläche (2) bestimmt wird, eine Schräglage des Zweiradfahrzeugs (1) bestimmt wird, und aus der Schräglage des Zweiradfahrzeugs (1) und der Neigung des Zweiradfahrzeugs (1) gegenüber der Fahrbahnoberfläche (2) die Querneigung der Fahrbahnoberfläche (2) ermittelt wird.

2. Verfahren (100) nach Anspruch 1, bei dem die Neigung des Zweiradfahrzeugs (1) gegenüber der Fahrbahnoberfläche (2) zumindest teilweise auf Grundlage eines Vergleichs der von dem Abrollumfang des wenigstens einen Rades (11, 12) abhängigen Größe mit wenigstens einem Referenzwert bestimmt wird.

3. Verfahren (100) nach Anspruch 2, bei dem der Referenzwert unter Verwendung einer Lernfunktion und/oder unter Verwendung wenigstens einer das wenigstens eine Rad (11, 12) beschreibenden Größe definiert wird.

4. Verfahren (100) nach einem der vorstehenden Ansprüche, bei dem als von dem Abrollumfang des wenigstens einen Rades (11, 12) abhängige Größe wenigstens ein Raddrehzahlwert und/oder eine von dem wenigstens einen Raddrehzahlwert abhängige Größe verwendet wird.

5. Verfahren (100) nach einem der vorstehenden Ansprüche, bei dem die Neigung des Zweiradfahrzeugs (1) gegenüber der Fahrbahnoberfläche (2) aus einer von den Abrollumfängen der zwei Räder (11, 12) abhängigen Größe bestimmt wird.

6. Verfahren (100) nach Anspruch 5, bei dem die Neigung des Zweiradfahrzeugs (1) gegenüber der Fahrbahnoberfläche (2) aus einer Drehzahldifferenz der zwei Räder (11, 12) bestimmt wird.

7. Verfahren (100) nach einem der vorstehenden Ansprüche, bei dem die Schräglage des Zweiradfahrzeugs mittels wenigstens einer Schräglagenbestimmungsvorrichtung (13) bestimmt wird.

8. Verfahren (100) nach Anspruch 7, bei dem die wenigstens eine Schräglagenbestimmungsvorrichtung (13) wenigstens einen Beschleunigungssensor und/oder wenigstens einen Gierratensensor umfasst.

9. Vorrichtung, die zur Bestimmung einer Querneigung einer von einem Zweiradfahrzeug (1) befahrenen Fahrbahnoberfläche (2) eingerichtet ist, wobei das Zweiradfahrzeug zwei Räder (11, 12) mit je einem Abrollumfang aufweist, wobei sich der Abrollumfang wenigstens eines Rades (11, 12) der zwei Räder (11, 12) in Abhängigkeit von einer Neigung des Zweiradfahrzeugs (1) gegenüber der Fahrbahnoberfläche (2) ändert, wobei die Vorrichtung Mittel, die dafür eingerichtet sind, aus einer von dem Abrollumfang des wenigstens einen Rads (11, 12) abhängigen Größe eine Neigung des Zweiradfahrzeugs (1) gegenüber der Fahrbahnoberfläche (2) zu bestimmen, Mittel, die dafür eingerichtet sind, eine Schräglage des Zweiradfahrzeugs (1) zu bestimmen, und Mittel, die dafür eingerichtet sind, aus der Schräglage des Zweiradfahrzeugs (1) und der Neigung des Zweiradfahrzeugs (1) gegenüber der Fahrbahnoberfläche (2) die Querneigung der Fahrbahnoberfläche (2) zu ermitteln, aufweist.

10. Computerprogramm mit Programmcodemitteln, die eine Recheneinheit, insbesondere eine Recheneinheit einer Vorrichtung nach Anspruch 9, dazu veranlassen, ein Verfahren nach einem der Ansprüche 1 bis 8 durchzuführen, wenn sie auf der Recheneinheit ausgeführt werden.

**Claims**

1. Method (100) for determining a cross slope of a carriageway surface (2) on which a two-wheeled vehicle (1) is travelling, wherein the two-wheeled vehicle (1) has two wheels (11, 12), each with a rolling circumference, wherein the rolling circumference of at least one wheel (11, 12) of the two wheels (11, 12) changes with respect to the carriageway surface (2) as a function of an inclination of the two-wheeled vehicle (1), wherein an inclination of the two-wheeled vehicle (1) with respect to the carriageway surface (2) is determined from a variable which is dependent on the rolling circumference of the at least one wheel (11, 12), an oblique position of the two-wheeled vehicle (1) is determined, and the cross slope of the carriageway surface (2) is acquired from the oblique position of the two-wheeled vehicle (1) and the inclination of the two-wheeled vehicle (1) with respect to the carriageway surface (2).

2. Method (100) according to Claim 1, in which the inclination of the two-wheeled vehicle (1) with respect to the carriageway surface (2) is determined at least partially on the basis of a comparison of the variable which is dependent on the rolling circumference of the at least one wheel (11, 12) with at least one reference value.

**3.** Method (100) according to Claim 2, in which the reference value is defined using a learning function and/or using at least one variable which describes the at least one wheel (11, 12).

**4.** Method (100) according to one of the preceding claims, in which at least one wheel rotational speed value and/or one variable which is dependent on the at least one wheel rotational speed value is used as the variable which is dependent on the rolling circumference of the at least one wheel (11, 12).

**5.** Method (100) according to one of the preceding claims, in which the inclination of the two-wheeled vehicle (1) with respect to the carriageway surface (2) is determined from a variable which is dependent on the rolling circumferences of the two wheels (11, 12) .

**6.** Method (100) according to Claim 5, in which the inclination of the two-wheeled vehicle (1) with respect to the carriageway surface (2) is determined from a rotational speed difference between the two wheels (11, 12).

**7.** Method (100) according to one of the preceding claims, in which the oblique position of the two-wheeled vehicle is determined by means of at least one oblique-position-determining device (13).

**8.** Method (100) according to Claim 7, in which the at least one oblique-position-determining device (13) comprises at least one acceleration sensor and/or at least one yaw rate sensor.

**9.** Device which is configured to determine a cross slope of a carriageway surface (2) on which a two-wheeled vehicle (1) is travelling, wherein the two-wheeled vehicle has two wheels (11, 12), each with a rolling circumference, wherein the rolling circumference of at least one wheel (11, 12) of the two wheels (11, 12) changes with respect to the carriageway, surface (2) as a function of an inclination of the two-wheeled vehicle (1), wherein the device has means which are configured to determine an inclination of the two-wheeled vehicle (1) with respect to the carriageway surface (2) from a variable which is dependent on the rolling circumference of the at least one wheel (11, 12), means which are configured to determine an oblique position of the two-wheeled vehicle (1), and means which are configured to acquire the cross slope of the carriageway surface (2) from the oblique position of the two-wheeled vehicle (1) and the inclination of the two-wheeled vehicle (1) with respect to the carriageway surface (2).

**10.** Computer program with program code means which cause a computing unit, in particular a computing unit of a device according to Claim 9, to carry out a method according to one of Claims 1 to 8 when they are executed on the computing unit.

**Revendications**

**1.** Procédé (100) pour déterminer une inclinaison transversale d'une surface de chaussée (2) sur laquelle roule un véhicule à deux roues (1), dans lequel le véhicule à deux roues (1) présente deux roues (11, 12) ayant chacune un périmètre de roulement, dans lequel le périmètre de roulement d'au moins une roue (11, 12) des deux roues (11, 12) varie en fonction d'une inclinaison du véhicule à deux roues (1) par rapport à la surface de chaussée (2), dans lequel on détermine à partir d'une grandeur dépendant du périmètre de roulement de ladite au moins une roue (11, 12) une inclinaison du véhicule à deux roues (1) par rapport à la surface de chaussée (2), on détermine une position oblique du véhicule à deux roues (1) et on détermine à partir de la position oblique du véhicule à deux roues (1) et de l'inclinaison du véhicule à deux roues (1) par rapport à la surface de chaussée (2) l'inclinaison transversale de la surface de chaussée (2).

**2.** Procédé (100) selon la revendication 1, dans lequel on détermine l'inclinaison du véhicule à deux roues (1) par rapport à la surface de chaussée (2) au moins en partie sur la base d'une comparaison de la grandeur dépendant du périmètre de roulement de ladite au moins une roue (11, 12) avec au moins une valeur de référence.

**3.** Procédé (100) selon la revendication 2, dans lequel on définit une valeur de référence en utilisant une fonction d'apprentissage et/ou en utilisant au moins une grandeur décrivant ladite au moins une roue (11, 12).

**4.** Procédé (100) selon l'une quelconque des revendications précédentes, dans lequel on utilise comme grandeur dépendant du périmètre de roulement de ladite au moins une roue (11, 12) au moins une valeur de nombre de tours de la roue et/ou une grandeur dépendant de ladite au moins une valeur de nombre de tours de la roue.

**5.** Procédé (100) selon l'une quelconque des revendications précédentes, dans lequel on détermine l'inclinaison du véhicule à deux roues (1) par rapport à la surface de chaussée (2) à partir d'une grandeur dépendant des périmètres de roulement des deux roues (11, 12).

**6.** Procédé (100) selon la revendication 5, dans lequel on détermine l'inclinaison du véhicule à deux roues (1) par rapport à la surface de chaussée (2) à partir d'une différence de nombres de tours des deux roues (11, 12).

7. Procédé (100) selon l'une quelconque des revendications précédentes, dans lequel on détermine la position oblique du véhicule à deux roues au moyen d'au moins un dispositif de détermination de position oblique (13).

8. Procédé (100) selon la revendication 7, dans lequel ledit au moins un dispositif de détermination de position oblique (13) comprend au moins un détecteur d'accélération et/ou au moins un détecteur de taux de lacet.

9. Dispositif qui est conçu pour la détermination d'une inclinaison transversale d'une surface de chaussée (2) sur laquelle roule un véhicule à deux roues (1), dans lequel le véhicule à deux roues (1) présente deux roues (11, 12) ayant chacune un périmètre de roulement, dans lequel le périmètre de roulement d'au moins une roue (11, 12) des deux roues (11, 12) varie en fonction d'une inclinaison du véhicule à deux roues (1) par rapport à la surface de chaussée (2), dans lequel le dispositif présente des moyens, qui sont conçus pour déterminer à partir d'une grandeur dépendant du périmètre de roulement de ladite au moins une roue (11, 12) une inclinaison du véhicule à deux roues (1) par rapport à la surface de chaussée (2), des moyens, qui sont conçus pour déterminer une position oblique du véhicule à deux roues (1), et des moyens, qui sont conçus pour déterminer à partir de la position oblique du véhicule à deux roues (1) et de l'inclinaison du véhicule à deux roues (1) par rapport à la surface de chaussée (2), l'inclinaison transversale de la surface de chaussée (2).

10. Programme informatique avec des moyens de code de programme, qui amènent une unité de calcul, en particulier une unité de calcul d'un dispositif selon la revendication 9, à exécuter un procédé selon l'une quelconque des revendications 1 à 8, lorsqu'ils sont exécutés sur l'unité de calcul.

Fig. 1A

Fig. 1B

Fig. 1C

Fig. 2A          Fig. 2B          Fig. 2C

EP 2 879 927 B1

**100**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007061114 A1
- DE 102011076640 A1
- DE 102008043794 A1
- EP 2127989 A1